# FASCICULE DE BREVET EUROPEEN

(11) **EP 4 125 193 B1**
(45) Date de publication et mention de la délivrance du brevet: **14.10.2026**
(21) Numéro de dépôt: 22187532.1
(22) Date de dépôt: 28.07.2022
(51) Int. Cl.: H02K 15/095

(54) **MACHINE AUTOMATIQUE A BOBINER EN FIL RANGE AVEC DEGRADE POUR ROTOR MULTI POLES**
AUTOMATISCHE DRAHTWICKELMASCHINE MIT ABSTUFUNG FÜR MEHRPOLIGEN ROTOR
AUTOMATIC WINDING MACHINE WITH ALIGNED WIRE WITH SHADING FOR MULTIPLE POLE ROTOR

(30) Priorité: 28.07.2021 FR 2108201
(43) Date de publication de la demande: 01.02.2023
(73) Titulaire: Safran Electrical & Power, 31700 Blagnac (FR)
(72) Inventeur: TOUZET, Eric, 78400 CHATOU (FR); POTELLE, Nicolas, 78400 CHATOU (FR); LEFEUVRE, Xavier, 78400 CHATOU (FR); LOUVIOT, Rémi, 78400 CHATOU (FR); STRIM, Sébastien, 78400 CHATOU (FR); GAUTHIER, Céline, 78400 CHATOU (FR)
(74) Mandataire: Atout PI Laplace

(56) Documents cités:
- JP-A- H10 112 962

## Description

L'invention concerne le domaine du bobinage des rotors et plus particulièrement le bobinage des rotors multi-pôles comprenant plus de quatre pôles. Plus précisément, l'invention a trait à un dispositif et un procédé de bobinage automatique de rotor multi-pôles. Néanmoins, l'invention trouve une application dans le domaine du bobinage automatisé dans un milieu exigu ou dans un milieu où l'espacement entre les bobines ne permet pas le passage d'un bras articulé destiné au bobinage.

Traditionnellement, le bobinage à fort taux de remplissage, ou l'action d'enrouler un fil électrique quelconque sur une bobine isolante d'une masse d'acier magnétique d'un rotor multi-pôles, c'est-à-dire un rotor comprenant plus de quatre pôles magnétiques, s'opère manuellement. En effet, cette action nécessite un savoir-faire et une attention particulière et permanente de la part du bobinier. Les pôles peuvent comprendre plus d'une couche de spires, ou tour complet du fil électrique autour du pôle. Ainsi, l'action de bobiner peut être répétée plusieurs fois sur un même pôle magnétique afin d'empiler un nombre défini de couches de spires, permettant ainsi d'augmenter les flux magnétiques du rotor et la force magnétomotrice de ce dernier.

Pour le bobinage des rotors ayant quatre pôles ou moins de quatre pôles magnétiques, il existe des machines automatisées permettant de prendre en charge le bobinage automatique des pôles. Néanmoins, ces machines ne sont pas adaptées à des rotors comprenant un nombre de pôles supérieur à quatre pôles magnétiques.

En effet, lors d'une situation de bobinage d'un rotor comprenant quatre pôles magnétiques ou moins de quatre pôles magnétiques, l'espace entre les pôles adjacents est suffisant pour permettre le passage d'une quelconque machine à bobiner ou d'un bras articulé commandé par une machine à bobiner. A l'inverse, pour des rotors comprenant plus de quatre pôles magnétiques, les pôles adjacents viennent masquer de façon plus importante la zone de bobinage. L'espace libre entre les pôles adjacents diminue fortement et ne permet alors plus l'utilisation d'une machine à bobiner pour rotor à quatre pôles. Ce constat est particulièrement marquant dans le cas d'un rotor comprenant six pôles magnétiques et plus, où la zone de bobinage est très limitée voire même étroite au fond des pôles du rotor.

Actuellement, le bobinage de ces rotors comprenant plus de quatre pôles s'opère avec des machines semi-automatiques qui nécessitent une intervention humaine durant les phases de bobinage. En effet, lors du bobinage, chaque spire formée doit être vérifiée par un bobinier.

En cas d'imprécision de placement et de tension d'une spire lors du bobinage dans une couche complète de spire, l'erreur impacte la totalité des couches de spires empilées autour du pôle induisant des problèmes magnétiques pour le pôle. A l'inverse, la vérification et la correction des imprécisions de placement ou de tension des spires autour du pôle nécessitent une main d'œuvre qualifiée. A l'heure actuelle, le bobinage avec empilement de couches de spires pour un pôle de rotor comprenant plus de quatre pôles est une tâche fastidieuse et coûteuse en temps.

En outre, l'attention humaine n'est pas toujours infaillible. Il peut donc souvent arriver, en répétant une action de vérification de la bonne conformité d'une couche de spires d'un pôle, que certaines erreurs ou imprécisions ne soient pas détectées. Dès lors, le remplissage des fils autour du pôle n'est pas optimal, diminuant la force magnétomotrice du rotor multi-pôles.

Ainsi, il existe, à l'heure actuelle, deux limitations techniques liées au bobinage des pôles de rotors ayant plus de quatre pôles magnétiques, à savoir :
- Une limitation d'espace due à l'étroitesse entre chaque pôle à bobiner. En effet, cette zone de bobinage apparait alors comme masquée par les pôles adjacents du point de vue de l'extérieur et ne permet alors pas l'utilisation d'une machine ou d'un bras articulé qui possède des dimensions trop volumineuses par rapport à l'espace disponible dans cette zone de bobinage masquée,
- Une impossibilité d'obtenir un bobinage dégradé, c'est-à-dire d'obtenir un empilement des couches de spires autour du pôle adapté à la dimension du pôle et notamment à la diminution de l'espace dans le fond du pôle à cause des imprécisions et de la non optimisation du bobinage. Typiquement, un bobinage dégradé permet d'obtenir le nombre de spire adapté à chaque couche en fonction de l'espace disponible tout en garantissant un espace suffisant pour le bobinage des pôles adjacents.

JP H10 112962 divulgue : Dispositif de bobinage automatique en fil d'un pôle de rotor interne multi-pôles, le pôle comprenant un fond et une tête, le dispositif de bobinage automatique en plus comprenant:
- un étau de support du rotor multi-pôles mobile en rotation,
- un plateau porte-aiguilles, centré sur le pôle du rotor multi-pôles suivant le premier axe, le plateau porte aiguille comprenant deux aiguilles de placement, chaque aiguille de placement comprenant deux extrémités le plateau porte aiguille étant mobile en translation autour du premier axe,
- un fil conducteur attaché au rotor multi-pôles suivant une première extrémité du fil conducteur et à un enrouleur de fil suivant une deuxième extrémité du fil conducteur, le fil conducteur étant en contact avec au moins une aiguille de placement, le dispositif de bobinage automatique étant apte à réaliser un nombre prédéterminé de séquences depuis une « configuration initiale » dans laquelle chaque aiguille de placement exerce une pression prédéterminée sur le pôle selon un angle prédéterminé par rapport au premier axe à une « configuration de bobinage » dans laquelle s'effectue successivement une rotation, une translation du pôle par rapport au plateau porte aiguille d'une longueur égale au diamètre du fil conducteur selon le premier axe de sorte à enrouler le fil conducteur autour du pôle, jusqu'à une « configuration finale » dans laquelle chaque aiguille de placement est distante du pôle.

L'invention vise à pallier tout ou partie des problèmes cités plus haut en proposant un dispositif innovant de bobinage automatique en fil rangé d'un pôle de rotor comprenant plus de quatre pôles. Le dispositif permet de bobiner un pôle dans des milieux exigus et de façon plus technique. Le dispositif permet aussi de bobiner automatiquement un pôle afin d'obtenir un empilement dégradé de couches de spires permettant un remplissage optimal du pôle. Le dispositif selon l'invention permet de se passer de toute intervention de l'Homme lors du bobinage tout en diminuant le temps de bobinage des pôles et en assurant un rangement optimal du fil enroulé autour du pôle.

A cet effet, l'invention a pour objet un dispositif de bobinage automatique en fil d'un pôle de rotor multi-pôles, le pôle comprenant un fond et une tête, le dispositif de bobinage automatique étant caractérisé en ce qu'il comprend les caractéristiques de la revendication 1.

Selon un aspect de l'invention, chaque aiguille de placement est à proximité du pôle à une distance inférieure ou égale à 0,3 millimètres lors de la « configuration initiale ».

Selon un aspect de l'invention, chaque aiguille de placement est contre le pôle lors de la « configuration initiale ».

Selon un aspect de l'invention, chaque aiguille de placement comprend une extrémité de forme complémentaire au pôle du rotor multi-pôles.

Selon un aspect de l'invention, le dispositif de bobinage comprend un bras d'alimentation en fil, le bras d'alimentation étant mobile en translation selon le premier axe.

Selon un aspect de l'invention, le dispositif de bobinage automatique est apte à passer dans une « configuration hybride », à la suite de la « configuration de bobinage », dans laquelle, successivement, l'étau de support effectue une rotation équivalente à une rotation complète du pôle suivant le premier axe et le bras d'alimentation en fil effectue une translation selon le premier axe, chaque aiguille de placement étant distante du pôle du rotor multi-pôles selon le deuxième axe.

Selon un aspect de l'invention, chaque aiguille de placement est connectée à un témoin de détection de défaut d'isolant du fil conducteur.

Selon un aspect de l'invention, le dispositif de bobinage comprend un capteur de tension du fil, le capteur de tension étant en contact avec le fil conducteur.

Selon un aspect de l'invention, le dispositif de bobinage comprend un compagnon apte à attacher le fil conducteur au rotor multi-pôles et à détacher le fil conducteur du rotor multi-pôles.

Selon un aspect de l'invention, l'étau de support du rotor multi-pôles est un étau de serrage auto-centrant.

L'invention a également trait à un procédé de bobinage automatique en fil d'un pôle de rotor multi-pôles, comprenant les étapes de la revendication 11.

Selon un aspect de l'invention, le procédé comprend une étape d'exécution de la « configuration hybride », définie comme la distanciation des quatre aiguilles de placement par rapport au pôle du rotor multi-pôles selon le deuxième axe, la rotation de l'étau de support du rotor multi-pôles suivant le premier axe équivalente à la rotation complète du pôle du rotor multi-pôles, et la translation du bras d'alimentation en fil suivant le premier axe, la rotation de l'étau de support du rotor multi-pôles et la translation du bras d'alimentation en fil pouvant être itérée de manière prédéterminée, à la suite de l'étape d'exécution de la « configuration de bobinage ».

Selon un aspect de l'invention, le procédé comprend une étape de détache du fil conducteur du rotor multi-pôles par le compagnon, à la suite de l'étape d'exécution de la « configuration finale ».

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente une vue schématisée d'un dispositif de bobinage automatique en fil d'un pôle de rotor multi-pôles selon l'invention,
[Fig.2] la figure 2 représente une vue agrandie du rotor multi-pôles au sein du dispositif de bobinage automatique en fil selon l'invention,
[Fig.3] la figure 3 représente une vue agrandie d'un plateau porte aiguille du dispositif de bobinage automatique en fil selon l'invention,
[Fig.4] la figure 4 représente une schématisée du plateau porte aiguille et du pôle du rotor multi-pôles dans une « configuration initiale »,
[Fig.5] la figure 5 représente une schématisée du plateau porte aiguille et du pôle du rotor multi-pôles dans une « configuration de bobinage »,
[Fig.6] la figure 6 représente une schématisée du plateau porte aiguille et du pôle du rotor multi-pôles dans une « configuration finale »,
[Fig.7] la figure 7 représente une schématisée du plateau porte aiguille et du pôle du rotor multi-pôles dans une « configuration hybride »,
[Fig.8] la figure 8 représente une schématisée d'un procédé de chargement automatique en fil d'un pôle de rotor multi-pôles selon l'invention.

Par souci de clarté, les mêmes éléments porteront les mêmes repères dans les différentes figures.

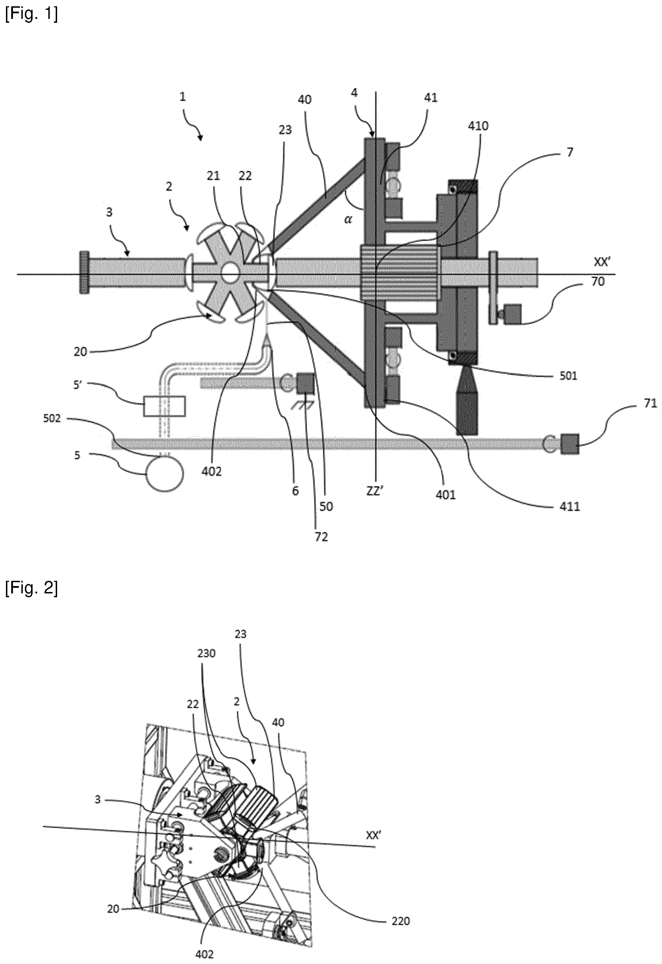

La figure 1 représente une vue schématisée d'une vue en coupe d'un dispositif de bobinage automatique 1 en fil d'un pôle 20 de rotor multi-pôles 2 selon l'invention. Le rotor multi-pôles 2 comprend au moins quatre pôles 20, et préférentiellement, au moins six pôles 20. Chaque pôle 20 comprend un fond 21 à proximité de l'axe de rotation de rotor multi-pôles 2, un corps 22 à bobiner et une tête 23, recouvrant complètement le corps 22 selon un premier axe XX' traversant la tête 23, le corps 22 et le fond 21 du même pôle 20, placée à la périphérie du rotor multi-pôle 2.

Le dispositif de bobinage automatique 1 en fil du pôle 20 de rotor multi-pôles 2 comprend :
- un étau de support 3 du rotor multi-pôles 2 mobile en rotation suivant le premier axe XX' traversant le pôle 20. Plus précisément, le pôle 20 peut être assimilé à une bobine vide. Et, le premier axe XX' est l'axe traversant le centre d'une section de cette bobine perpendiculairement à la tête 23 du pôle 20. L'étau de support 3, qui est représenté plus précisément en figure 2, assure le maintien du rotor multi pôles 2. En effet, le chariot de support 3 assure une unique mobilité en rotation du rotor multi-pôles 2 selon le premier axe XX'. Ainsi, l'étau de support 3 empêche toute translation du rotor multi-pôles 2 et toute autre rotation qui n'est pas centrée autour du premier axe XX'.
- un plateau porte-aiguilles 4, centré sur le pôle 20 du rotor multi-pôles 2 suivant le premier axe XX' et mobile en rotation autour du premier axe XX'. Le plateau porte aiguille 4 prend la forme d'une structure porteuse 41 circulaire qui comprend un centre 410 traversé axialement par une cannelure 7, mobile en translation selon le premier axe XX', et par le premier axe XX'. Le plateau porte aiguille 4 comprend quatre aiguilles de placement 40, chaque aiguille de placement 40 est positionnée, suivant une première extrémité 401, contre la structure porteuse 41 à équidistance du centre 410. Préférentiellement, la première extrémité 401 des aiguilles de placement 40 est positionnée à proximité d'une périphérie 411 de la structure porteuse 41 circulaire, c'est-à-dire que la première extrémité 401 de chaque aiguille de placement 40 est plus proche de la périphérie 411 du plateau porte aiguille 4 que du centre 410. Les aiguilles de placement 40 sont en contact avec le pôle 20 du rotor multi-pôles 2 par l'intermédiaire d'une seconde extrémité 402. Plus précisément, la seconde extrémité 402 est en contact avec le corps 22 du pôle 20. En variante, les aiguilles de placement 40 sont proches du pôle 20 du rotor multi-pôles 2 avec une distance inférieure ou égal à 0,3 millimètres entre la seconde extrémité 402 et le corps 22. La tête 23, qui recouvre complètement le corps 22, forme alors un obstacle entre la seconde extrémité 402 de chaque aiguille de placement 40 et le corps 23. Ainsi, le placement de la première extrémité 401 à proximité de la périphérie 411 de la structure porteuse 41 permet d'obtenir un angle 90° - *α* maximal entre chaque aiguille de placement 40 et la structure porteuse 41 et assure le passage de chaque aiguille autour de la tête 23 du pôle et le contact avec le corps 22 à bobiner.
- un fil conducteur 50 attaché au rotor multi-pôles 2 suivant une première extrémité du fil conducteur 501 et à un enrouleur de fil 5 suivant une deuxième extrémité du fil conducteur 502. Le fil conducteur 50 est en contact avec au moins une aiguille de placement 40. Préférentiellement, le fil conducteur 50 est du fil de cuivre.

Les aiguilles de placement 40 sont disposées contre le pôle 20 du rotor multi-pôles 2 de sorte à permettre au fil conducteur 50 d'être partiellement enroulé autour des aiguilles de placement 40. Dans une configuration préférentielle, les aiguilles de placement 40 sont disposées uniformément contre le corps 22, c'est-à-dire à équidistance les unes des autres.

En variante, les aiguilles de placement 40 sont réparties de sorte à être en proximité deux à deux.

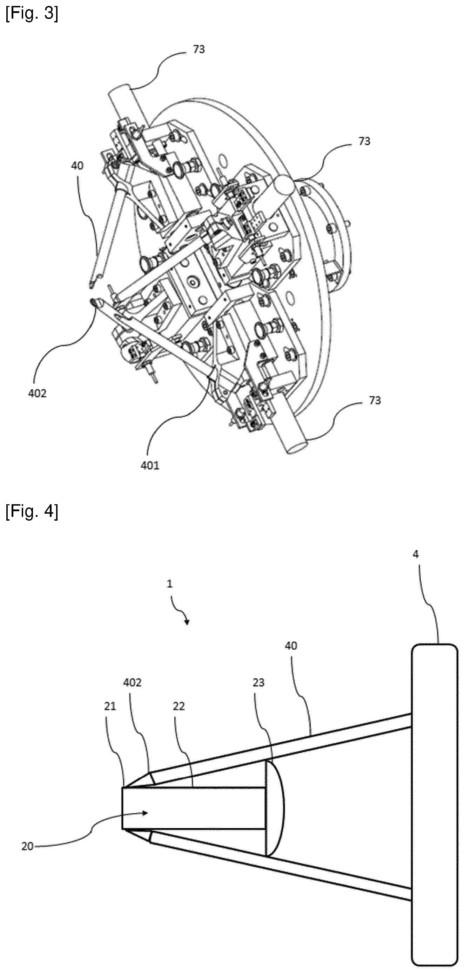

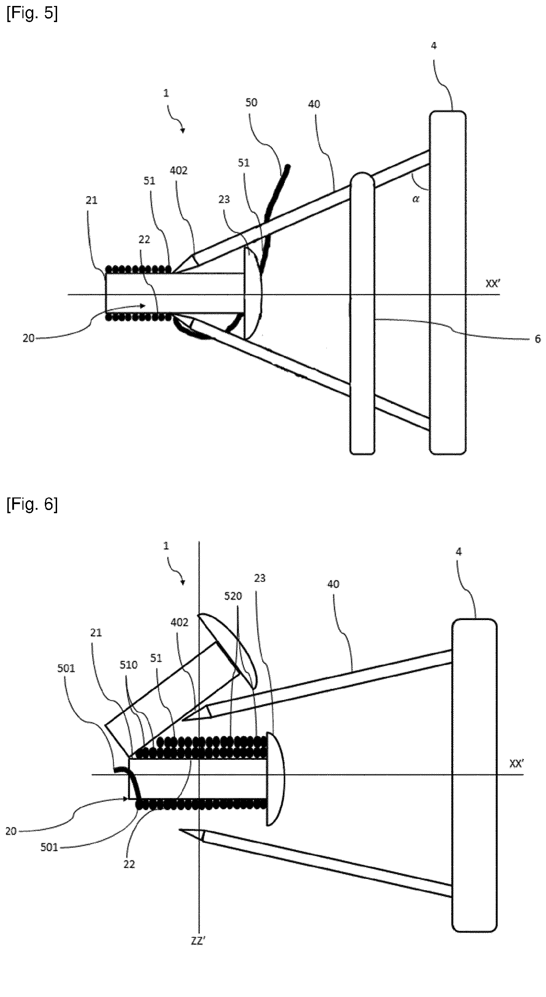

Le dispositif de bobinage automatique 1 est apte à réaliser un nombre prédéterminé de séquences depuis une « configuration initiale », représentée en figure 4, dans laquelle chaque aiguille de placement 40 exerce une pression prédéterminée sur le pôle 20 selon l'angle *α* par rapport au premier axe XX' à une « configuration de bobinage », représentée en figure 5, dans laquelle s'effectue successivement une rotation du plateau porte aiguille 4 équivalente à une rotation complète du pôle 20 suivant le premier axe XX' et une translation du pôle 20 par rapport au plateau porte aiguille 4 d'une longueur égale au diamètre du fil conducteur 50 selon le premier axe XX' de sorte à enrouler le fil conducteur 50 autour du pôle 20, jusqu'à une « configuration finale », représentée en figure 6, dans laquelle chaque aiguille de placement 40 est distante du pôle 20 selon un deuxième axe ZZ' s'étendant de manière radiale au plateau porte aiguille 4. En variante, lors de la « configuration initiale », chaque aiguille de placement 40 exerce une pression prédéterminée sur le pôle 20 puis s'éloigne du pôle 20 d'une distance inférieure ou égal à 0,3 millimètres entre la seconde extrémité 402 et le corps 22 afin de permettre un jeu.

En fonction du positionnement de la seconde extrémité 402 de chaque aiguille de placement 40 par rapport au corps 22 du pôle 20, l'angle *α* varie de 25° à 65° par rapport au premier axe XX' et est préférentiellement de 45°.

Le dispositif de bobinage automatique 1 comprend un bras d'alimentation 6 en fil mobile en translation selon le premier axe XX'. Ce bras d'alimentation 6 permet de placer de fil conducteur 50 contre une aiguille de placement 40.

Ainsi, lors de la « configuration de bobinage », le dispositif de bobinage automatique 1 effectue successivement :
- Une rotation identique du chariot de support 3, relié directement au plateau porte aiguille 4, par l'intermédiaire de la cannelure 7, et du plateau porte aiguille 4 et équivalente à une rotation complète du pôle 20 autour du premier axe XX'. Plus précisément, le dispositif de bobinage automatique 1 comprend un moteur de mise en rotation 70 du plateau porte aiguille 4, qui, par l'intermédiaire des aiguilles de placement 40 qui compressent le pôle 20, impose une rotation identique à l'étau de support 3 et au rotor multi-pôles 2. Ainsi, le fil conducteur 50, qui est attaché au rotor multi-pôles 2 suivant la première extrémité du fil conducteur 501, suit le mouvement de rotation du plateau porte aiguille 4 et s'enroule autour des aiguilles de placement 40 formant une spire 51, comme représenté en figure 5.
- Une translation du pôle 20 du rotor multi-pôles 2 par rapport au plateau porte aiguille 4 d'une longueur équivalente au diamètre du fil conducteur 50 selon le premier axe XX'. Cette translation du pôle 20 par rapport plateau porte aiguille 4 se fait selon le premier axe XX' et dans la direction du bobinage, c'est-à-dire que si le bobinage se fait du fond 21 en direction de la tête 23 du pôle 20, alors la translation prend cette direction. A l'inverse, si le bobinage se fait de la tête 23 en direction du fond 21 du pôle 20, le long du corps 22 à bobiner, c'est-à-dire opposée à la direction citée, alors la translation prend cette direction opposée. De plus, chaque spire 51 formée autour des quatre aiguilles de placement 40 par l'enroulement du fil conducteur 50 autour du plateau porte aiguille 4, coulisse naturellement, du fait de la présence de l'angle *α*, le long des aiguilles de placement 40 en direction de la seconde extrémité 402 des aiguilles de placement 40 et du corps 22 à bobiner du pôle 20. Afin de permettre cette translation entre le pôle 20 et le plateau porte aiguille 4, le dispositif de bobinage automatique 1 comprend un premier moteur de mise en translation 71 de la cannelure 7 selon le premier axe XX'. En outre, afin de permettre au bras d'alimentation 6 de parfaitement placer de fil conducteur 50 contre une aiguille de placement 40, le dispositif de bobinage automatique 1 peut comprendre un deuxième moteur de mise en translation 72 du bras d'alimentation 6 en fil permettant au bras d'alimentation 6 d'être mobile et d'avoir la même mobilité en translation suivant le premier axe XX' que le plateau porte aiguille 4.

La figure 2 représente une vue agrandie du rotor multi-pôles 2, axée autour du pôle 20 à bobiner qui fait face au plateau porte aiguille 4 et aux aiguilles de placement 40. L'étau de support 3 maintient le rotor multi-pôles 2 suivant l'axe de rotation du rotor multi-pôles 2 de manière à faire obstacle à toute rotation naturelle du rotor multi-pôles 2 suivant son axe de rotation. A titre d'exemple, l'étau de support du rotor 3 peut être un étau de serrage auto-centrant mais peut être globalement un dispositif mécanique permettant de limiter la mobilité du rotor multi-pôles 2 à une rotation autour du premier axe XX'.

Chaque corps 22 du pôle 20 prend la forme d'un parallélépipède recouvert intégralement selon un bord externe 220 par la tête 23, qui prend aussi la forme d'un parallélépipède de faible épaisseur. En variante, le corps 22 du pôle 20 prend la forme d'un cylindre et la tête 23 prend une forme de demi-sphère aplatie.

Chaque aiguille de placement 40 comprend une extrémité de forme complémentaire au pôle 20 du rotor multi-pôles 2. Comme représenté en figure 3, la seconde extrémité 402 de chaque aiguille de placement 40 possède une forme complémentaire au corps 22 du pôle. Chaque aiguille de placement 40 possède une forme de cylindre. Tel quel, le contact entre la seconde extrémité 402 de chaque aiguille de placement et le corps 22 du pôle 20 n'est pas optimal. En effet, une fonction des aiguilles de placement 40 est d'accompagner le positionnement des spires 51 à l'aplomb du corps 22 du pôle 20 et de garantir l'immobilité de ces spires 51, une fois positionnées. Ainsi, afin d'optimiser le positionnement entre chaque aiguille de placement 40 et le corps 22 du pôle 20, la seconde extrémité 402 prend une forme complémentaire au corps 22 du pôle 20. Avantageusement, cette forme complémentaire permet de rapprocher la seconde extrémité 402 de la tête 23.

Le plateau porte aiguille 4 comprend également autant de moteur d'actionnement 73 que d'aiguilles de placement 40. Donc, dans un cas préférentiel, le plateau porte aiguille 4 comprend quatre moteurs d'actionnement 73, chacun connecté directement à une aiguille de placement 40, de sorte à pouvoir observer quatre couples aiguille de placement 40 et moteur d'actionnement 73. Chaque moteur d'actionnement 73 est connecté à une aiguille de placement 40 suivant la première extrémité 401 de l'aiguille de placement 40. Ainsi, ces moteurs d'actionnement 73 permettent une translation de la seconde extrémité 402 des aiguilles de placement 40 suivant le deuxième axe ZZ' afin de s'écarter du corps 22 du pôle 20 lors de la configuration « configuration finale », comme représentée en figure 6.

Ainsi, comme énoncé précédemment, le dispositif de bobinage automatique 1 est apte passer dans la « configuration initiale », représentée en figure 4, dans laquelle les quatre aiguilles de placement 40 exercent une pression prédéterminée sur le corps 22 du pôle 20. Plus précisément, cette « configuration initiale » débute par le positionnement de chaque aiguille de placement 40 contre le corps 22. En variante, chaque aiguille de placement 40 s'éloigne ensuite du pôle 20 d'une distance inférieure ou égal à 3 millimètres entre la seconde extrémité 402 et le corps 22 afin de permettre d'obtenir un jeu entre chaque aiguille de placement 40 et le pôle 20. De plus, en fonction de la direction du bobinage énoncée précédemment, chaque aiguille de placement 40 peut être, de façon préférentielle, en contact avec le fond 21 ou la tête 23 du pôle 20. Ainsi, lorsque le bobinage se fait du fond 21 en direction de la tête 23 du pôle 20, alors la « configuration initiale » débute avec le placement des aiguilles de placement 40 contre le corps 22 et le fond 21 du pôle 20. A l'inverse, si le bobinage se fait de la tête 23 en direction du fond 21 du pôle 20, alors la « configuration initiale » débute avec le placement des aiguilles de placement 40 contre ou, en variante, à proximité du corps 22 et de la tête 23 du pôle 20. Ce positionnement des aiguilles de placement 40 à proximité du fond 21 ou de la tête 23 du pôle 20 et à proximité du corps 22 du pôle 20 est possible par la mise en action du premier moteur de mise en translation 71 de la cannelure 7 permettant la translation de la cannelure 7 par rapport au plateau porte aiguille 4 et des moteurs d'actionnement 73 des aiguilles de placement 40 induisant une translation de la seconde extrémité 402 des aiguilles de placement 40.

Une fois chaque aiguille de placement 40 positionnée, le dispositif de bobinage automatique 1 peut passer dans la « configuration de bobinage », représentée en figure 5, dans laquelle s'effectue successivement une rotation du plateau porte aiguille 4 équivalente à une rotation complète du pôle 20 suivant le premier axe XX' par la mise en action du moteur de mise en rotation 70 du plateau porte aiguille 4, accompagné du chariot de support 3, et la translation du pôle 20 par rapport au plateau porte aiguille 4 d'une longueur égale au diamètre du fil conducteur 50 selon le premier axe XX' dans la direction du bobinage de sorte à enrouler le fil conducteur 50 autour du pôle 20 par la mise en action du premier moteur de mise en translation 71 du plateau porte aiguille 4. Avant d'effectuer la rotation et la translation, le bras d'alimentation 6 positionne le fil conducteur 50 en contact avec au moins une aiguille de placement 40. Ainsi, le fil conducteur 50 étant attaché au rotor multi-pôles 2 suivant la première extrémité du fil conducteur 501, ce dernier subit aussi la rotation suivant le premier axe XX' par la mise en action du moteur de mise en rotation 70 du plateau porte aiguille 4. En effet, la rigidité du fil conducteur 50 et la présence de l'angle *α* permettant d'incliner le fil conducteur 50 en direction du corps 22 suffit au coulissage du fil conducteur 50.

Alternativement, l'enrouleur de fil 5, qui est relié au fil conducteur 50 suivant sa deuxième extrémité 502, peut comprendre un moteur de rétention 5' du fil conducteur 50. Ce moteur de rétention 5' du fil conducteur 50 permet de générer une tension supplémentaire continue sur le fil conducteur 50. Ainsi, lors de chaque rotation de l'étau de support 3 et du plateau porte aiguille 4 équivalente à une rotation complète du pôle 20 suivant le premier axe XX', le fil conducteur 50, enroulé autour d'au moins deux aiguilles de placement 40 et formant une portion d'une spire 51, coulisse le long des aiguilles de placement 40 du fait de la tension et de l'angle *α* jusqu'à la seconde extrémité 402 et est enroulée autour du corps 22 du pôle 20. S'en suit alors la translation de la cannelure 7 par rapport au plateau porte aiguille 4 d'une longueur équivalente au diamètre du fil conducteur 50 selon le premier axe XX' dans la direction du bobinage de manière à obtenir l'espace nécessaire pour accueillir, lors de la rotation suivante de l'étau de support 3 et du plateau porte aiguille 4, une nouvelle spire 51.

En outre, le dispositif de bobinage automatique 1 peut comprendre un capteur de tension du fil conducteur 50, en contact avec le fil conducteur 50, au niveau du bras d'alimentation 6 et préférentiellement fixé sur le bras d'alimentation 6 de manière à obtenir une valeur précise de la tension du fil enrouleur 50 et adapter cette dernière. Et, chaque aiguille de placement 40 peut comprendre un témoin de rétention du fil conducteur 50 permettant de faciliter le guidage du fil conducteur 50 sur l'aiguille de placement 40. Ce témoin de rétention peut simplement être un témoin pour le bon positionnement du bras d'alimentation 6 ou même une butée de rétention permettant de remplacer le bras d'alimentation 6.

Ainsi, la rotation et la translation se répètent un nombre prédéfini de fois jusqu'à obtenir le nombre prédéfini de spires 51 autour du corps 22 du pôle 20. Après avoir obtenu le nombre prédéfini de spires 51 autour du corps 22 du pôle 20, le dispositif de bobinage automatique 1 peut passer à la « configuration finale », représentée en figure 6. Lors de cette « configuration finale », chaque aiguille de placement 40 est distante du pôle 20 selon le deuxième axe ZZ' par la mise en action des quatre moteurs d'actionnement 73.

Le dispositif de bobinage automatique 1 réalise alors un nombre prédéterminé de séquences depuis la « configuration initiale à la « configuration de bobinage » jusqu'à la « configuration finale ». Ce nombre prédéterminé de séquences étant lié au nombre de couches de spires 51 souhaité pour chaque pôle 20.

Le dispositif de bobinage automatique 1 présente l'avantage de pouvoir effectuer un bobinage avec dégradé, comme représenté en figure 6, du nombre de couches de spires 51. En effet, le dispositif de bobinage automatique 1 peut aussi être configuré pour effectuer un nombre prédéterminé de rotations équivalentes à une rotation complète du pôle 20 suivant le premier axe XX' et de translation d'une longueur égale au diamètre du fil conducteur 50 selon le premier axe XX' pendant la « configuration de bobinage ». Ce nombre prédéterminé de rotations et de translations est équivalent au nombre de spires 51 de la couche pouvant être enroulées autour du corps 22 et peut être calculé en fonction de l'espace disponible et du diamètre du fil conducteur 50. Ainsi, un pôle 20 peut comprendre une multitude de couches 510, 520 de spires 51 empilées les unes sur les autres contre le corps 22 du pôle 20. Le nombre de couches 510, 520 souhaité par pôle influe alors sur le nombre de séquences de passage du dispositif de bobinage 1 dans la « configuration initiale » puis dans la « configuration de bobinage » et enfin dans la « configuration finale ».

En outre, le bobinage dégradé implique que le nombre de spires 51 par couche diminue. Ainsi, la couche 510 comprend un nombre de spires 51 prédéterminé en fonction de l'espace disponible et du diamètre du fil conducteur 50 supérieur à la couche 520 du fait de la réduction de l'espace disponible à cause de la présence des pôles adjacents au pôle 20.

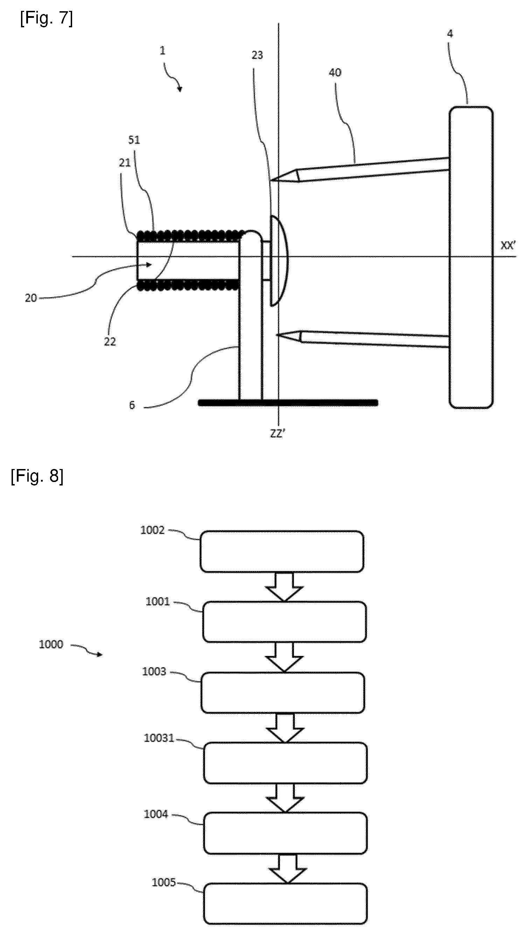

En plus de la « configuration initiale », de la « configuration de bobinage » et de la « configuration finale », le dispositif de bobinage automatique 1 est apte à passer dans une « configuration hybride », à la suite de la « configuration de bobinage », comme représenté en figure 7. Dans cette « configuration hybride » et de manière successive, l'étau de support 3 effectue une rotation équivalente à une rotation complète du pôle 20 suivant le premier axe XX' et le bras d'alimentation 6 en fil effectue une translation selon le premier axe XX' dans la direction du bobinage. Plus précisément, la « configuration hybride » débute avec une distanciation de chaque aiguille de placement 40 du pôle 20 du rotor multi-pôles 2 selon le deuxième axe ZZ' par la mise en action des moteurs d'actionnement 73 des aiguilles de placement 40. Le bras d'alimentation 6 translate alors suivant le premier axe XX', par la mise en action du deuxième moteur de mise en translation 72, de manière à faire face au corps 22 et à placer le fil conducteur 50 directement contre le corps 22 sans utiliser les aiguilles de placement 40 pour guider le fil, qui deviennent passives comme dans la « configuration finale ». S'en suit, de manière similaire à la « configuration de bobinage », successivement une rotation équivalente à une rotation complète du pôle 20 suivant le premier axe XX' de l'étau de support 3 et une translation du bras d'alimentation 6 en fil suivant le premier axe XX' dans la direction du bobinage d'une longueur égale au diamètre du fil conducteur 50 de manière à former des spires 51. Cette translation du bras d'alimentation 6 se fait dans la direction du sens de bobinage, c'est-à-dire le bras d'alimentation 6 effectue une translation identique à la translation observée lors de la précédente « configuration de bobinage » par le pôle 20 par rapport au plateau porte aiguille 4. Ainsi, si la direction du bobinage observé lors de la précédente « configuration de bobinage » se fait du fond 21 en direction de la tête 23 du pôle 20, alors chaque translation successive du bras d'alimentation 6 se fait dans la direction de la tête 23 du pôle 20 suivant le premier axe XX'. A l'inverse, si la direction du bobinage observé lors de la précédente « configuration de bobinage » se fait de la tête 23 du pôle en direction du fond 21, alors chaque translation successive du bras d'alimentation 6 lors de la « configuration hybride » se fait dans la direction du fond 21 du pôle 20 suivant le premier axe XX'.

En effet, à proximité de la tête 23 du pôle 20, les aiguilles de placement 40 ne permettent pas d'assurer un placement optimisé le long du corps 22 du pôle des spires 51 formées lors de la rotation du plateau porte aiguille 4. Ainsi, afin de garantir un rangement homogène et optimisé des spires 51 le long du corps 22 dans une couche 510, le bras d'alimentation 6 remplace la fonction de guidage des spires 51 des aiguilles de placement 40. Ce remplacement n'est possible qu'à proximité de la tête 23, là où l'espace est le moins restreint. A l'inverse, un tel type de remplacement n'est pas possible à proximité du fond 21 du pôle du fait du faible espacement dû à la présence des pôles adjacents. Le dispositif de bobinage automatique 1 alterne ainsi, par le biais de la « configuration de bobinage » et de la « configuration hybride », le moyen de guidage et d'enroulement des spires 51 autour du corps 22 du pôle 20.

Ainsi, le dispositif de bobinage automatique 1 enchaîne successivement la « configuration initiale », la « configuration de bobinage », la « configuration hybride » et la « configuration finale » un nombre prédéterminé de séquences égal au nombre de couches de spires 51 désiré autour du corps 22 du pôle 20.

Enfin, le dispositif de bobinage automatique 1 peut comprendre un compagnon apte à attacher le fil conducteur 50 au rotor multi-pôles 2 et à détacher le fil conducteur 50 du rotor multi-pôles 2.

Le dispositif de bobinage automatique 1 est adapté au rotor de type « rotor interne ».

L'invention propose également un procédé de chargement automatique (étape 1000) en fil d'un pôle 20 de rotor multi-pôles 2, représenté en figure 8. Le procédé de chargement automatique (étape 1000) comprend les étapes suivantes :
- Mise en place du dispositif de bobinage automatique contre le pôle 20 du rotor multi pôle 2,
- Exécution de la « configuration initiale » (étape 1002), définie comme le placement des quatre aiguilles de placement 40 de manière à être en contact sur le pôle 20 du rotor multi-pôles 2 ou, selon une variante, être à proximité du pôle 20,
- Attache (étape 1001) du fil conducteur 50 au rotor multi-pôles 2 suivant une première extrémité du fil conducteur 501 par l'intermédiaire d'un compagnon,
- Exécution de la « configuration de bobinage » (étape 1003), définie comme la succession de la rotation de l'étau de support 3 du rotor multi-pôle 2 et du plateau porte aiguille 4 suivant le premier axe XX' équivalente à la rotation complète du pôle 20 du rotor multi-pôles 2, la translation du pôle 20 par rapport au plateau porte aiguille 4 d'une longueur égale au diamètre du fil conducteur selon le premier axe XX' dans la direction du bobinage. La « configuration de bobinage » peut être itérée de manière prédéterminée, c'est-à-dire un nombre prédéterminé de fois.
- Exécution de la « configuration finale » (étape 1004), définie comme la distanciation des quatre aiguilles de placement 40 par rapport au pôle 20 du rotor multi-pôles 2 selon le deuxième axe ZZ',
- Détache (étape 1005) du fil conducteur 50 du rotor multi-pôles 2 par le compagnon à la suite de l'étape 1004.

Les étapes 1002, 1003 et 1004 peuvent être exécutées un nombre prédéterminé d'occurrences.

Le procédé de chargement automatique 1000 comprend également une étape d'exécution (étape 10031) de la « configuration hybride », définie comme la distanciation des quatre aiguilles de placement 40 par rapport au pôle 20 du rotor multi-pôles 2 selon le deuxième axe ZZ', la rotation de l'étau de support 3 du rotor multi-pôles 2 suivant le premier axe XX' équivalente à la rotation complète du pôle 20 du rotor multi-pôles 2, et la translation du bras d'alimentation 6 en fil suivant le premier axe XX' dans la direction du bobinage, la rotation de l'étau de support 3 du rotor multi-pôles 2 et la translation du bras d'alimentation 6 en fil pouvant être itérée de manière prédéterminée, à la suite de l'étape d'exécution de la « configuration de bobinage » (étape 1003).

## Revendications

1. Dispositif de bobinage automatique (1) en fil d'un pôle (20) de rotor interne multi-pôles (2), le pôle (20) comprenant un fond (21) et une tête (23), le dispositif de bobinage automatique (1) comprenant :
- un étau de support (3) du rotor multi-pôles (2) mobile en rotation suivant un premier axe (XX') traversant le pôle (20) du rotor multi-pôles (2),
- un plateau porte-aiguilles (4), centré sur le pôle (20) du rotor multi-pôles (2) suivant le premier axe (XX'), le plateau porte aiguille (4) comprenant quatre aiguilles de placement (40), chaque aiguille de placement (40) comprenant deux extrémités (401, 402), le plateau porte aiguille (4) étant mobile en rotation et en translation autour du premier axe (XX'),
- un fil conducteur (50) attaché au rotor multi-pôles (2) suivant une première extrémité du fil conducteur (501) et à un enrouleur de fil (5) suivant une deuxième extrémité du fil conducteur (502), le fil conducteur (50) étant en contact avec au moins une aiguille de placement (40),
le dispositif de bobinage automatique (1) étant apte à réaliser un nombre prédéterminé de séquences depuis une « configuration initiale » dans laquelle chaque aiguille de placement (40) exerce une pression prédéterminée sur le pôle (20) selon un angle (*α*) prédéterminé par rapport au premier axe (XX') à une « configuration de bobinage » dans laquelle s'effectue successivement une rotation du plateau porte aiguille (4) équivalente à une rotation complète du pôle (20) suivant le premier axe (XX') et une translation du pôle (20) par rapport au plateau porte aiguille (4) d'une longueur égale au diamètre du fil conducteur (50) selon le premier axe (XX') de sorte à enrouler le fil conducteur (50) autour du pôle (20), jusqu'à une « configuration finale » dans laquelle chaque aiguille de placement (40) est distante du pôle (20) selon un deuxième axe (ZZ') radial au plateau porte aiguille (4), ledit angle (*α*) prédéterminé étant variable entre un angle minimal de 25° et un angle maximal de 65° par rapport à une extrémité (402) des deux extrémités (401, 402) de chaque aiguille de placement (40) en contact avec le pôle (20).

2. Dispositif de bobinage automatique (1) selon la revendication 1, dans lequel chaque aiguille de placement (40) est à proximité du pôle à une distance inférieure ou égale à 0,3 millimètres lors de la « configuration initiale ».

3. Dispositif de bobinage automatique (1) selon l'une des revendications 1 ou 2, dans lequel chaque aiguille de placement (40) est contre le pôle (20) lors de la « configuration initiale ».

4. Dispositif de bobinage automatique (1) selon l'une des revendications 1 à 3, dans lequel chaque aiguille de placement (40) comprend une extrémité (402) de forme complémentaire au pôle (20) du rotor multi-pôles (2).

5. Dispositif de bobinage automatique (1) selon les revendications 1 à 4, comprenant un bras d'alimentation (6) en fil, le bras d'alimentation (6) étant mobile en translation selon le premier axe (XX').

6. Dispositif de bobinage automatique (1) selon l'une des revendications précédentes, le dispositif de bobinage automatique (1) étant apte à passer dans une « configuration hybride », à la suite de la « configuration de bobinage », dans laquelle, successivement, l'étau de support (3) effectue une rotation équivalente à une rotation complète du pôle (20) suivant le premier axe (XX') et le bras d'alimentation (6) en fil effectue une translation selon le premier axe (XX'), chaque aiguille de placement (40) étant distante du pôle (20) du rotor multi-pôles (2) selon le deuxième axe (ZZ').

7. Dispositif de bobinage automatique (1) selon l'une des revendications 1 à 6, dans lequel chaque aiguille de placement (40) est connectée à un témoin de détection de défaut d'isolant du fil conducteur (50).

8. Dispositif de bobinage automatique (1) selon l'une des revendications précédentes, comprenant un capteur de tension du fil, le capteur de tension étant en contact avec le fil conducteur (50).

9. Dispositif de bobinage automatique (1) selon l'une des revendications précédentes, comprenant un compagnon apte à attacher le fil conducteur (50) au rotor multi-pôles (2) et à détacher le fil conducteur (50) du rotor multi-pôles (2).

10. Dispositif de bobinage automatique (1) selon l'une des revendications précédentes, dans lequel l'étau de support (3) du rotor multi-pôles (2) est un étau de serrage auto-centrant.

11. Procédé de bobinage automatique (1000) en fil d'un pôle (20) de rotor interne multi-pôles (2), le procédé (1000) comprenant les étapes suivantes :
- Mise en place du dispositif de bobinage automatique selon la revendication 9, ou la revendication 10 en combinaison avec la revendication 9,
- Exécution de la « configuration initiale » (étape 1002), définie comme le placement des quatre aiguilles de placement (40) de manière à exercer une pression sur le pôle (20) du rotor multi-pôles (2),
- Attache (étape 1001) du fil conducteur (50) au rotor multi-pôles (2) suivant une première extrémité du fil conducteur (501) par l'intermédiaire d'un compagnon,
- Exécution de la « configuration de bobinage » (étape 1003), définie comme la succession de la rotation de l'étau de support (3) du rotor multi-pôle (2) et du plateau porte aiguille (4) suivant le premier axe (XX') équivalente à la rotation complète du pôle (20) du rotor multi-pôles (2), la translation du pôle (20) par rapport au plateau porte aiguille (4) d'une longueur égale au diamètre du fil conducteur (50) selon premier axe (XX'), la « configuration de bobinage » pouvant être itérée de manière prédéterminée,
- Exécution de la « configuration finale » (étape 1004), définie comme la distanciation des quatre aiguilles de placement (40) par rapport au pôle (20) du rotor multi-pôles (2) selon le deuxième axe (ZZ'),
les étapes d'exécution de la « configuration initiale » (étape 1002), d'exécution de la « configuration de bobinage » (étape 1003) et d'exécution de la « configuration finale » (étape 1004) pouvant être exécutées un nombre prédéterminé d'occurrence.

12. Procédé de bobinage automatique selon la revendication 11, le procédé comprenant une étape d'exécution de la « configuration hybride » (étape 10031), définie comme la distanciation des quatre aiguilles de placement (40) par rapport au pôle (20) du rotor multi-pôles (2) selon le deuxième axe (ZZ'), la rotation de l'étau de support (3) du rotor multi-pôles (2) suivant le premier axe (XX') équivalente à la rotation complète du pôle (20) du rotor multi-pôles (2), et la translation du bras d'alimentation (6) en fil suivant le premier axe (XX'), la rotation de l'étau de support (3) du rotor multi-pôles (2) et la translation du bras d'alimentation (6) en fil pouvant être itérée de manière prédéterminée, à la suite de l'étape d'exécution de la « configuration de bobinage » (étape 1003).

13. Procédé de bobinage automatique selon l'un des revendications 11 ou 12, le procédé comprenant une étape de détache (étape 1005) du fil conducteur (50) du rotor multi-pôles (2) par le compagnon, à la suite de l'étape d'exécution de la « configuration finale » (étape 1004).

## Patentansprüche

1. Vorrichtung (1) zum automatischen Wickeln eines Pols (20) eines mehrpoligen Innenrotors (2) mit Draht, wobei der Pol (20) einen Boden (21) und einen Kopf (23) umfasst, wobei die Vorrichtung (1) zum automatischen Wickeln umfasst:
- einen Haltespannstock (3) des mehrpoligen Rotors (2), der entlang einer ersten Achse (XX'), die durch den Pol (20) des mehrpoligen Rotors (2) verläuft, drehbeweglich ist,
- eine Nadelhalterplatte (4), die entlang der ersten Achse (XX') auf den Pol (20) des mehrpoligen Rotors (2) zentriert ist, wobei die Nadelhalterplatte (4) vier Platzierungsnadeln (40) umfasst, wobei jede Platzierungsnadel (40) zwei Enden (401, 402) umfasst, wobei die Nadelhalterplatte (4) um die erste Achse (XX') drehbeweglich und translatorisch beweglich ist,
- einen Leiterdraht (50), der an dem mehrpoligen Rotor (2) entlang eines ersten Endes des Leiterdrahts (501) und an einer Drahtspule (5) entlang eines zweiten Endes des Leiterdrahts (502) befestigt ist, wobei der Leiterdraht (50) mit mindestens einer Platzierungsnadel (40) in Kontakt steht,
wobei die Vorrichtung (1) zum automatischen Wickeln in der Lage ist, eine vorbestimmte Anzahl von Abläufen auszuführen, beginnend von einer "Erstkonfiguration", in der jede Platzierungsnadel (40) einen vorbestimmten Druck auf den Pol (20) unter einem vorbestimmten Winkel (α) bezüglich der ersten Achse (XX') ausübt, bis hin zu einer "Wicklungskonfiguration", in der nacheinander eine Drehung der Nadelhalterplatte (4) erfolgt, die einer vollständigen Drehung des Pols (20) entlang der ersten Achse (XX') entspricht, und eine Translation des Pols (20) bezüglich der Nadelhalterplatte (4) um eine Länge, die gleich dem Durchmesser des Leitungsdrahts (50) entlang der ersten Achse (XX') erfolgt, um den Leiterdraht (50) um den Pol (20) zu wickeln, bis zu einer "Endkonfiguration", in der jede Platzierungsnadel (40) vom Pol (20) entlang einer zweiten Achse (ZZ') beabstandet ist, die radial zur Nadelhalterplatte (4) verläuft, wobei der vorbestimmte Winkel (α) zwischen einem Mindestwinkel von 25° und einem Höchstwinkel von 65° in Bezug auf ein Ende (402) der beiden Enden (401, 402) jeder Platzierungsnadel (40), die mit dem Pol (20) in Kontakt steht, variabel ist.

2. Vorrichtung (1) zum automatischen Wickeln nach Anspruch 1, wobei sich jede Platzierungsnadel (40) in der "Erstkonfiguration" in einem Abstand von weniger als oder gleich 0,3 Millimetern zum Pol befindet.

3. Vorrichtung (1) zum automatischen Wickeln nach einem der Ansprüche 1 oder 2, wobei jede Platzierungsnadel (40) in der "Erstkonfiguration" am Pol (20) anliegt.

4. Vorrichtung (1) zum automatischen Wickeln nach einem der Ansprüche 1 bis 3, wobei jede Platzierungsnadel (40) ein Ende (402) umfasst, dessen Form komplementär zum Pol (20) des mehrpoligen Rotors (2) ist.

5. Vorrichtung (1) zum automatischen Wickeln nach einem der Ansprüche 1 bis 4, umfassend einen Drahtzuführarm (6), wobei der Zuführarm (6) entlang der ersten Achse (XX') translatorisch beweglich ist.

6. Vorrichtung (1) zum automatischen Wickeln nach einem der vorstehenden Ansprüche, wobei die Vorrichtung (1) zum automatischen Wickeln in der Lage ist, im Anschluss an die "Wicklungskonfiguration" in eine "Hybridkonfiguration" überzugehen, in der nacheinander der Haltespannstock (3) eine Drehung ausführt, die einer vollständigen Drehung des Pols (20) entlang der ersten Achse (XX') entspricht, und der Drahtzuführarm (6) eine Translation entlang der ersten Achse (XX') ausführt, wobei jede Platzierungsnadel (40) vom Pol (20) des mehrpoligen Rotors (2) entlang der zweiten Achse (ZZ') beabstandet ist.

7. Vorrichtung (1) zum automatischen Wickeln nach einem der Ansprüche 1 bis 6, wobei jede Platzierungsnadel (40) mit eine Anzeigeeinrichtung zur Erkennung von Isolationsfehlern des Leiterdrahts (50) verbunden ist.

8. Vorrichtung (1) zum automatischen Wickeln nach einem der vorstehenden Ansprüche, umfassend einen Drahtspannungssensor, wobei der Spannungssensor mit dem Leiterdraht (50) in Kontakt steht.

9. Vorrichtung (1) zum automatischen Wickeln nach einem der vorstehenden Ansprüche, umfassend einen Begleiter, der in der Lage ist, den Leiterdraht (50) am mehrpoligen Rotor (2) zu befestigen und den Leiterdraht (50) vom mehrpoligen Rotor (2) zu lösen.

10. Vorrichtung (1) zum automatischen Wickeln nach einem der vorstehenden Ansprüche, wobei der Haltespannstock (3) des mehrpoligen Rotors (2) ein selbstzentrierender Spannstock ist.

11. Vorrichtung (1000) zum automatischen Wickeln eines Pols (20) eines mehrpoligen Innenrotors (2) mit Draht, wobei das Verfahren (1000) die folgenden Schritte umfasst:
- Implementieren der Vorrichtung zum automatischen Wickeln nach Anspruch 9 oder Anspruch 10 in Kombination mit Anspruch 9,
- Ausführen der "Erstkonfiguration" (Schritt 1002), definiert als die Platzierung der vier Platzierungsnadeln (40) derart, dass Druck auf den Pol (20) des mehrpoligen Rotors (2) ausgeübt wird,
- Befestigen (Schritt 1001) des Leiterdrahts (50) am mehrpoligen Rotor (2) entlang eines ersten Endes des Leiterdrahts (501) mittels eines Begleiters,
- Ausführen der "Wicklungskonfiguration " (Schritt 1003), definiert als die Abfolge der Drehung des Haltespannstocks (3) des mehrpoligen Rotors (2) und der Nadelhalterplatte (4) entlang der ersten Achse (XX'), die einer vollständigen Drehung des Pols (20) des multipoligen Rotors (2) entspricht, der Translation des Pols (20) in Bezug auf die Nadelhalterplatte (4) um eine Länge, die gleich dem Durchmesser des Leiterdrahts (50) entlang der ersten Achse (XX') ist, wobei die "Wicklungskonfiguration" in vorbestimmter Weise wiederholt werden kann,
- Ausführen der "Endkonfiguration" (Schritt 1004), definiert als das Abstandhalten der vier Platzierungsnadeln (40) in Bezug auf den Pol (20) des mehrpoligen Rotors (2) entlang der zweiten Achse (ZZ'), wobei die Schritte zur Ausführung der "Erstkonfiguration" (Schritt 1002), zur Ausführung der "Wicklungskonfiguration" (Schritt 1003) und zur Ausführung der "Endkonfiguration" (Schritt 1004) eine vorbestimmte Anzahl von Malen ausgeführt werden können.

12. Verfahren zum automatischen Wickeln nach Anspruch 11, wobei das Verfahren einen Schritt zur Ausführung der "Hybridkonfiguration" (Schritt 10031) umfasst, definiert als das Abstandhalten der vier Platzierungsnadeln (40) in Bezug auf den Pol (20) des mehrpoligen Rotors (2) entlang der zweiten Achse (ZZ'), die Drehung des Haltespannstocks (3) des mehrpoligen Rotors (2) entlang der ersten Achse (XX'), das einer vollständigen Drehung des Pols (20) des mehrpoligen Rotors (2) entspricht, und die Translation des Drahtzuführarms (6) entlang der ersten Achse (XX'), wobei die Drehung des Haltespannstocks (3) des mehrpoligen Rotors (2) und die Translation des Drahtzuführarms (6) in vorbestimmter Weise im Anschluss an den Schritt zur Ausführung der "Wicklungskonfiguration" (Schritt 1003) wiederholt werden können.

13. Verfahren zum automatischen Wickeln nach Anspruch 11 oder 12, wobei das Verfahren einen Schritt zum Lösen (Schritt 1005) des Leiterdrahts (50) vom mehrpoligen Rotor (2) durch den Bediener im Anschluss an den Schritt zur Ausführung der "Endkonfiguration" (Schritt 1004) umfasst.

## Claims

1. Automatic winding device (1) for winding wire onto a pole (20) of a multi-pole internal rotor (2), the pole (20) comprising a bottom (21) and a head (23), the automatic winding device (1) comprising:
- a support vice (3) supporting the multi-pole rotor (2) and capable of rotational movement about a first axis (XX') passing through the pole (20) of the multi-pole rotor (2),
- a needle plate (4), centered on the pole (20) of the multi-pole rotor (2) along the first axis (XX'), the needle plate (4) comprising four placement needles (40), each placement needle (40) comprising two ends (401, 402), the needle plate (4) being capable of rotational and translational movement about the first axis (XX'),
- a conducting wire (50) attached to the multi-pole rotor (2) by a first end of the conducting wire (501) and to a wire winder (5) by a second end of the conducting wire (502), the conducting wire (50) being in contact with at least one placement needle (40),
the automatic winding device (1) being able to perform a predetermined number of sequences from an "initial configuration" in which each placement needle (40) exerts a predetermined pressure on the pole (20) at a predetermined angle (α) with respect to the first axis (XX') to a "winding configuration" wherein, successively, the needle plate (4) is rotated by an amount equivalent to one complete rotation of the pole (20) about the first axis (XX') and the pole (20) is moved translationally with respect to the needle plate (4) by a length equal to the diameter of the conducting wire (50) along the first axis (XX') so as to wind the conducting wire (50) around the pole (20), as far as a "final configuration" in which each placement needle (40) is spaced apart from the pole (20) along a second axis (ZZ') radial to the needle plate (4), said predetermined angle (α) being variable between a minimum angle of 25° and a maximum angle of 65° with respect to one end (402) of the two ends (401, 402) of each placement needle (40) in contact with the pole (20).

2. Automatic winding device (1) according to claim 1, wherein each placement needle (40) is in proximity to the pole at a distance of less than or equal to 0.3 millimeters during the "initial configuration".

3. Automatic winding device (1) according to either claim 1 or 2, wherein each placement needle (40) is against the pole (20) during the "initial configuration".

4. Automatic winding device (1) according to any one of claims 1 to 3, wherein each placement needle (40) comprises an end (402) having a shape complementary to the pole (20) of the multi-pole rotor (2).

5. Automatic winding device (1) according to claims 1 to 4, comprising a wire feed arm (6), the wire feed arm (6) being capable of translational movement along the first axis (XX').

6. Automatic winding device (1) according to any one of the preceding claims, the automatic winding device (1) being able to switch to a "hybrid configuration", following the "winding configuration", wherein, successively, the support vice (3) performs a rotation equivalent to one complete rotation of the pole (20) about the first axis (XX') and the wire feed arm (6) performs a translational movement along the first axis (XX'), each placement needle (40) being spaced apart from the pole (20) of the multi-pole rotor (2) along the second axis (ZZ').

7. Automatic winding device (1) according to any one of claims 1 to 6, wherein each placement needle (40) is connected to an indicator for detecting an insulation defect in the conducting wire (50).

8. Automatic winding device (1) according to any one of the preceding claims, comprising a wire tension sensor, the tension sensor being in contact with the conducting wire (50).

9. Automatic winding device (1) according to any one of the preceding claims, comprising a companion able to attach the conducting wire (50) to the multi-pole rotor (2) and to detach the conducting wire (50) from the multi-pole rotor (2).

10. Automatic winding device (1) according to any one of the preceding claims, wherein the support vice (3) of the multi-pole rotor (2) is a self-centering clamping vice.

11. Automatic winding method (1000) for winding wire onto a pole (20) of a multi-pole internal rotor (2), the method (1000) comprising the following steps:
- Setting up the automatic winding device according to claim 9, or claim 10 in combination with claim 9,
- Performing the "initial configuration" (step 1002), defined as positioning the four placement needles (40) so as to exert pressure on the pole (20) of the multi-pole rotor (2),
- Attaching (step 1001) the conducting wire (50) to the multi-pole rotor (2) by a first end of the conducting wire (501) by means of a companion,
- Performing the "winding configuration" (step 1003), defined as the succession of the rotation of the support vice (3) of the multi-pole rotor (2) and of the needle plate (4) about the first axis (XX') equivalent to the complete rotation of the pole (20) of the multi-pole rotor (2), the translational movement of the pole (20) with respect to the needle plate (4) by a length equal to the diameter of the conducting wire (50) along the first axis (XX'), the "winding configuration" being able to be iterated in a predetermined manner,
- Performing the "final configuration" (step 1004), defined as spacing the four placement needles (40) apart from the pole (20) of the multi-pole rotor (2) along the second axis (ZZ'), the steps of performing the "initial configuration" (step 1002), performing the "winding configuration" (step 1003) and performing the "final configuration" (step 1004) being able to be performed a predetermined number of occurrences.

12. Automatic winding method according to claim 11, the method comprising a step of performing the "hybrid configuration" (step 10031), defined as spacing the four placement needles (40) apart from the pole (20) of the multi-pole rotor (2) along the second axis (ZZ'), the rotation of the support vice (3) of the multi-pole rotor (2) about the first axis (XX') equivalent to the complete rotation of the pole (20) of the multi-pole rotor (2), and the translational movement of the wire feed arm (6) along the first axis (XX'), the rotation of the support vice (3) of the multi-pole rotor (2) and the translational movement of the wire feed arm (6) being able to be iterated in a predetermined manner, following the step of performing the "winding configuration" (step 1003).

13. Automatic winding method according to either claim 11 or 12, the method comprising a step of detaching (step 1005) the conducting wire (50) from the multi-pole rotor (2) by the companion, following the step of performing the "final configuration" (step 1004).
